# FASCICULE DE BREVET EUROPEEN

(11) **EP 1 513 405 B1**
(45) Date de publication et mention de la délivrance du brevet: **06.06.2007**
(21) Numéro de dépôt: 03755051.4
(22) Date de dépôt: 24.04.2003
(51) Int. Cl.: A21D 13/00, A23P 1/08, A21C 9/06, A21C 15/00

(54) **PROCEDE DE FABRICATION D'UN PRODUIT ALIMENTAIRE A PATE PLIEE, CHAINE INDUSTRIELLE DE MISE EN OEUVRE ET PRODUIT OBTENU**
VERFAHREN SOWIE ANLAGE ZUR HERSTELLUNG VON GEFÜLLTER BACKWARE MIT GEFALTETEM TEIG UND DARAUS HERGESTELLTE PRODUKTE
METHOD OF PRODUCING A FOLDED-DOUGH FOOD PRODUCT, INDUSTRIAL CHAIN USED FOR SAME AND PRODUCT THUS OBTAINED

(30) Priorité: 24.05.2002 FR 0206336
(43) Date de publication de la demande: 16.03.2005
(73) Titulaire: Gerard Schlienger Investissements, 75011 Paris (FR)
(72) Inventeur: SCHLIENGER, Gérard, F-88800 Vittel (FR); JACQUEMIN, Bernard, F-88170 Chatenois (FR)
(74) Mandataire: Schwartz, Thierry J.
(86) Numéro de dépôt international: PCT/FR2003/001301
(87) Numéro de publication internationale: WO 2003/099020

(56) Documents cités:
- WO-A-02/21927
- FR-A- 2 732 558
- FR-A- 2 741 779
- FR-A- 2 774 866
- FR-A- 2 791 527
- GB-A- 2 305 350

## Description

L'invention concerne un procédé de fabrication d'un produit alimentaire comportant une pâte pliée, une chaîne industrielle de mise en oeuvre et le produit ainsi obtenu.

Un problème avec les produits alimentaires de type pizza, composés d'une pâte et d'ingrédients disposés sur la pâte, réside dans l'impossibilité de les consommer à chaud et à la main, en raison de leur taille et de leur forme. De même, la division de ces produits en parts ne se prête pas non plus à une préhension et une consommation simultanées convenables, car les divers ingrédients coulent à chaud et peuvent tomber.

Ce problème se retrouve également avec ces produits alimentaires conservés à froid, au réfrigérateur, en glacière ou au congélateur, puis réchauffés pour être consommés sur place.

On connaît en outre les pizzas en forme de chaussons dont les ingrédients enfermés dans la pâte sont cuits à l'étouffée sous la pâte d'enveloppe repliée. Une cuisson correcte des ingrédients conduit à surcuire la pâte d'enveloppe et en général à la carboniser. De plus, la cuisson à l'étouffée des ingrédients diminue nettement les qualités gustatives de cette pizza. Par ailleurs, la forme en section sensiblement semi-circulaire, la pâte peu rigide de ce type de pizza et le fait que les ingrédients se trouvent sous une forme relativement pâteuse et peuvent donc couler, ne permet pas sa préhension et consommation simultanées à chaud et à la main.

On connaît par le document FR 2 741 779, un procédé de fabrication d'un produit alimentaire à forme d'étui et consommable comme un sandwich. Ce produit nécessite une pré-cuisson du produit en deux temps. II ne peut être réchauffé correctement pour pouvoir être consommé à chaud, un réchauffage de type à micro-ondes étant exclu pour préserver la qualité et la rigidité de la pâte.

Le document FR 2 791 527 décrit un produit alimentaire de type pizza en forme de poche fermée bord à bord par un cordon de pâte alimentaire. Là encore, le réchauffage ne peut s'effectuer correctement, le produit alimentaire étant équivalent au précédent en terme de produit à réchauffer.

L'invention vise à remédier aux inconvénients ci-dessus évoqués et, en particulier, à permettre une consommation à chaud et à la main d'un produit alimentaire de type pizza ou équivalent, en préservant les qualités gustatives des ingrédients après réchauffage.

Pour ce faire, l'invention propose de réaliser ce produit sous la forme d'une pâte repliée contenant des ingrédients et de manière à laisser ces ingrédients libre d'accès par au moins une tranche.

Plus précisément, l'invention a pour objet un procédé de fabrication d'un produit alimentaire à pâte pliée, consistant à :
- préparer une pâte crue, de type à pizza ou équivalent, étendue dans un format de base sensiblement rectangulaire, double de celui du produit à obtenir ;
- disposer sur cette pâte crue les divers ingrédients choisis ;
- cuire cette pâte avec ses ingrédients dans un four au contact de la sole et à la chaleur ambiante de la voûte à la chaleur ambiante de ce four ;
- replier sur elle-même la pâte garnie cuite à la sortie du four à partir d'un pli médian formant un dos de liaison à pâte continue de deux faces en regard sensiblement planes, avec un alignement des bords des faces délimitant une tranche principale, opposée au dos de liaison, et des tranches latérales, dans un format correspondant à celui du produit à obtenir ; et
- enduire la tranche principale ainsi que, au plus, l'une des tranches latérales et les éventuels ingrédients y affleurant, d'un cordon alimentaire de jonction des bords.

Le cordon de jonction des bords des faces repliées peut être une pâte alimentaire simple, issue d'un mélange d'une farine de grains de céréales et d'eau à la viscosité adéquate pour l'application adhérente sur lesdits bords, ou une pâte alimentaire à base d'amidon et/ou fécule.

La cuisson des ingrédients sur la pâte à l'air ambiant chaud du four demeure traditionnelle et préserve les qualités gustatives d'une cuisson classique. La structure repliée de la pâte fermée sur sa tranche principale maintient suffisamment les ingrédients dans la pâte durcie sans risque de fuite, même dans le cas où les deux tranches latérales sont dépourvues de cordon alimentaire.

Avantageusement, lors du réchauffage par tout moyen classique de type grill, toaster, broche chauffante ou four, la chaleur pénètre aisément par la ou les tranches latérales libres, c'est-à-dire dépourvues de cordon alimentaire, et réchauffe les ingrédients jusqu'au coeur du produit sans avoir à le surchauffer de l'extérieur.

Le format du produit obtenu peut être celui d'un produit de consommation courant, sandwich ou chausson aux pommes, dont les dimensions se prêtent à la préhension et consommation simultanée à la main.

L'invention concerne également une chaîne industrielle de fabrication en continu pour la mise en oeuvre du procédé ci-dessus, comportant les postes opérationnels successifs suivants :
- un poste de préparation d'une pâte crue ;
- un poste d'extrusion-laminage de la pâte crue préparée pour être délivrée en une bande continue par une ouverture débouchant sur un tapis de convoyage en mouvement, selon une largeur et une épaisseur déterminées par cette ouverture ;
- au moins un poste de garnissage de la bande de pâte avec des ingrédients déposés sur une épaisseur calibrée par largage en pluie et/ou projection ;
- un four de cuisson, disposé en chevauchement sur le tapis de convoyage de la pâte garnie, pour cuire la pâte en continu à une température et en un temps de passage déterminés ;
- un poste de découpe longitudinale en bandes élémentaires de la bande de pâte et de découpe transversale pour réaliser des formats de base sensiblement rectangulaires, avec séparation de ces formats, la découpe transversale pouvant être réalisée à la suite de la découpe longitudinale ou après le poste de cuisson d'un cordon de pâte élémentaire déposé sur la tranche des bandes élémentaires ;
- un poste de pliage des formats de base de pâte garnie cuite, chaude et encore souple, ce poste étant muni, pour chaque bande élémentaire de pâte, d'un moyen d'appui médian et de guides de redressement vertical, en regard l'une de l'autre, des faces formées par pliage de chaque format de base à l'aide du moyen d'appui médian ;
- un poste de dépose d'un cordon de pâte alimentaire sur au moins la tranche principale formée entre les bords sensiblement en regard des faces de chacun des formats de base replié, maintenues en position verticale à l'aide de flasques latéraux ;
- un poste de cuisson et de coloration des cordons de pâte alimentaire dans un four transversal afin de cuire et colorer les cordons pour obtenir une pâte formant une enveloppe homogène et rigidifiée ; et
- un poste de refroidissement et de conditionnement des produits alimentaires obtenus et à consommer après réchauffage.

Selon des modes de réalisation particuliers :
- chaque guide de redressement vertical est formée d'une rampe de roulement défilant entre un axe d'entraînement horizontal et un axe d'entraînement vertical ;
- un couple de rampes est associé à chaque bande élémentaire de pâte, les rampes étant symétriques par rapport au plan médian présenté par la bande élémentaire de pâte ;
- le poste de garnissage est double, dans le premier poste une couche de nappage de sauce de fond est déposée en pluie à partir d'une première trémie et, dans le deuxième poste, les autres ingrédients sont déposés par projection à l'aide d'un tambour denté par entraînement en rotation à partir d'une deuxième trémie ;
- au poste de découpe, les moyens de découpe sont choisis parmi des lames tranchantes, des dispositifs d'émission d'ultra-sons, des dispositifs de rayonnement laser et des jets d'eau haute puissance
- des cordons de pâte alimentaire des formats de base sont détachés sur chaque format par accélération du tapis de convoyage après le poste de dépose du cordon de pâte alimentaire.

L'invention concerne également le produit alimentaire réalisé selon le procédé décrit ci-dessus, notamment mis en oeuvre par la chaîne définie ci-dessus, à format parallélépipédique fermé par un cordon de pâte alimentaire sur la tranche principale opposée au dos de liaison et formée entre les faces principales ainsi que, en option, sur au plus l'une des tranches latérales.

Le produit est conservé surgelé, à une température inférieure ou égale à -18°C, puis réchauffé avant consommation à l'aide de tout moyen de chauffage, notamment toaster, lampe infrarouge ou résistance électrique.

D'autres caractéristiques et avantages de l'invention apparaîtront à la lecture de l'exemple de réalisation de l'invention qui suit, en référence aux figures annexées qui représentent, respectivement :
- la figure 1, une vue en perspective d'un produit alimentaire à forme de brique plate selon l'invention, et
- la figure 2, une vue schématique d'une chaîne industrielle de fabrication en continu de ce produit alimentaire.

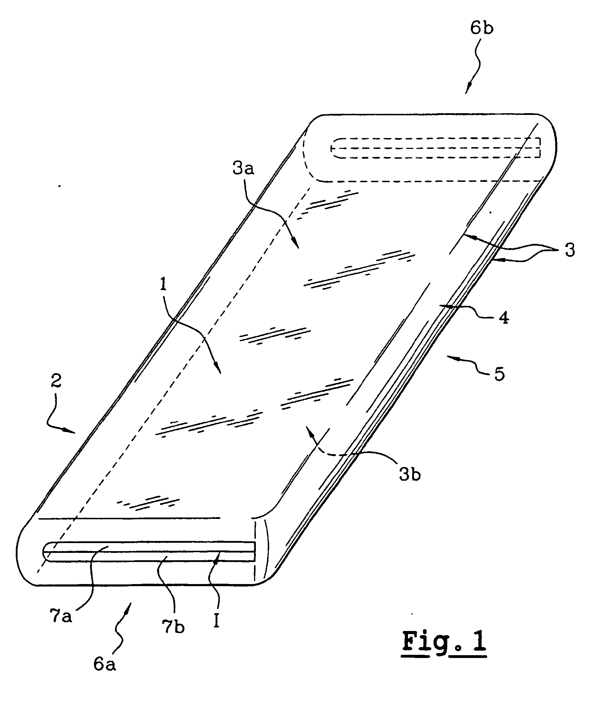

Le produit alimentaire tel qu'il est représenté à la figure 1 peut être réalisé de façon artisanale, à la main, ou de façon industrielle sur une chaîne de fabrication en continu.

Selon la façon artisanale, on prépare d'abord une pâte classique, de préférence une pâte à pizza crue 1, comportant de la farine, de l'eau, du sel, de la levure morte, du sucre glace et de l'huile. Toutes les variétés de pâte sont possibles, avec des proportions variables en farine et eau, et des additifs particuliers (oeufs, beurre, lait, crème fraîche, etc.). Il est par exemple possible d'utiliser une pâte à crêpe, à gaufre, pâte brisée, etc. suivant le type de produit que l'on souhaite obtenir, en particulier suivant le type de garnitures, sucrées ou salées.

La pâte à pizza est étendue sur un plan de travail selon un format sensiblement rectangulaire, approximativement double de celui du produit final en largeur, par exemple de largeur d'environ 15 cm, longueur d'environ 20 cm et d'épaisseur d'environ 1 à 2 mm. Il peut éventuellement être autre que rectangulaire, en gardant néanmoins son caractère allongé.

Les ingrédients de garniture sont ensuite disposés et répartis de façon classique, tels que nappage de sauce tomate, morceaux de champignon, de fromage, de lardons, d'artichaut, selon le choix souhaité. Cette pâte est alors introduite dans un four à pizza classique, à sole et voûte réfractaires chauffées autour de 400°C, pendant une à deux minutes. La cuisson est effectuée à la chaleur ambiante du four pour les ingrédients et par le contact avec la sole pour la pâte de fond 1.

Ensuite, l'ensemble pâte et garniture cuit est sorti du four et disposé à nouveau sur le plan de travail. La pâte garnie chaude est alors repliée sur elle-même sensiblement selon une ligne longitudinale médiane de la pâte délimitant deux moitiés. Une moitié est rabattue sur l'autre à l'aide de pelles, l'une des pelles étant appliquée en maintien sur la première moitié et l'autre rabattant la seconde moitié sur la première. La pâte présente un dos 2, définissant la direction longitudinale du produit et reliant deux faces planes principales 3a et 3b, en regard l'une de l'autre et sensiblement superposables. Ce faisant, le produit obtenu présente le format définitif d'une brique plate de forme parallélipédique, d'environ 7 cm x 20 cm x 1 cm.

Un cordon 4 d'une pâte alimentaire issue d'un mélange de farine et d'eau est ensuite appliqué sur la tranche principale 5, limitée par les bords longitudinaux 3 des faces principales parallèlement au dos 2. La chaleur de la pâte, à 150-200°C, suffit à cuire et donc durcir le cordon 4. Ce cordon durci, outre qu'il maintient les ingrédients de pizza dans la poche, participe à l'augmentation de la rigidité du produit obtenu pour sa consommation à la main.

Les tranches latérales 6a et 6b ne sont pas scellées par un cordon alimentaire. Ces tranches latérales permettent ainsi d'atteindre le coeur du produit et de ses ingrédients lors de son réchauffage en vue de sa consommation. En effet, l'interface « l » entre les deux couches d'ingrédients superposés 7a et 7b reste alors accessible de l'extérieur et la chaleur atteint aisément cet interface à partir d'au moins une tranche latérale.

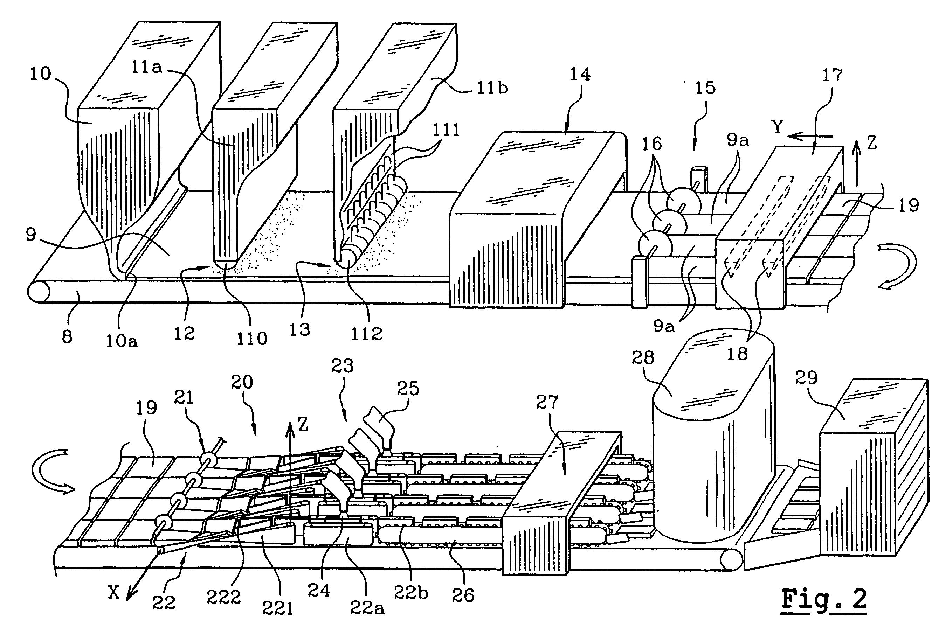

Un exemple de chaîne de fabrication industrielle continue est représenté à la figure 2.

La chaîne de fabrication illustrée comporte un tapis de convoyage en mouvement 8, selon une vitesse d'environ deux mètres par minute, d'une bande de pâte 9 délivrée à partir d'une extrudeuse - lamineuse 10. Cet appareil est alimenté en pâte à pizza par une trémie, la pâte étant préparée en amont à un poste situé à part. La bande de pâte 9 est d'environ 560 mm de large (après délignage des bords), soit huit fois celle du produit final à obtenir (7 cm environ), et d'épaisseur calibrée (entre 2 et 4 mm environ). Cette épaisseur est obtenue par l'ouverture 10a de l'appareil qui affleure le tapis.

La bande défile ensuite au droit de deux postes de garnissage en ingrédients de pizza, 11a et 11b. Le premier poste 11a de nappage en sauce tomate 12, délivre une couche de nappage en pluie à partir d'une première trémie munie d'un cylindre alvéolé 110 tournant sur une brosse à poils fins et disposés transversalement. La couche est calibrée par l'ouverture de sortie qui affleure la bande de pâte.

Les autres ingrédients 13, par exemple des morceaux de différents fromages, de jambon, de champignon, ou autres garnitures suivants le type de pizza (morceaux d'artichaut, de lardons, etc.) sont délivrés à partir d'une deuxième trémie au poste 11b, représenté partiellement arraché. La dépose est réalisée par projection au fur et à mesure de l'avance de la bande, à partir de peignes 111 montés en quinconce et couplés à un tambour de sortie 112 en rotation. Le tambour est denté pour calibrer l'épaisseur de la couche. Le tambour tourne avantageusement dans un sens opposé au sens de défilement du tapis, de manière à améliorer la régularité de la répartition des ingrédients.

La pâte ainsi garnie 9a passe ensuite dans un four tunnel 14 à sole et à voûte disposé en chevauchement du tapis, pour être cuite au contact de la sole et à la chaleur ambiante de la voûte du four à environ 400°C pendant 30 à 40 secondes. En sortie, la température de la pâte garnie cuite est de 70-80°C.

La bande garnie passe ensuite au droit d'un premier poste de découpe 15 en quatre bandes élémentaires 9a de même largeur (environ 14 cm) à l'aide de trois disques de découpe 16. Les disques sont montés à intervalles réguliers sur un axe transversal au tapis, la découpe étant réalisée parallèlement au sens de défilement de la pâte. La pression exercée par les disques et leur épaisseur sont ajustées pour permettre une franche séparation longitudinale entre les bandes élémentaires ainsi formées.

La découpe en formats de base, à la longueur du produit à réaliser (environ 20cm), est effectuée au moyen d'un deuxième poste de découpe 17, une « guillotine » à couteaux transversaux 18 montés en mouvement tangentiel selon deux axes Z-Y, verticalement et horizontalement, selon la direction d'avancée du tapis de convoyage 8. Les formats de base ainsi découpés et garnis 19 sont avantageusement séparés transversalement les uns des autres d'un petit intervalle (par exemple 1 à 2 cm) au moyen d'une mise en arrêt butée séquentielle des couteaux sur le tapis de convoyage.

Les formats garnis et cuits, chauds (à environ 150-200°C) et donc encore souples, passent ensuite sur le poste de pliage 20. Ce poste est équipé, pour chaque bande élémentaire de pâte, d'un disque d'appui médian 21 pour diviser chaque format en deux faces d'égales surfaces reliées par le dos 2 formé à partir du pli médian. Des rampes 22 de redressement vertical, qui prennent naissance au niveau des disques d'appui sur un rouleau d'axe horizontal transversal X, sont disposées longitudinalement sous les formats garnis et sont entraînées à la même vitesse que le tapis de convoyage. Chaque rampe est formée d'une bande continue, raccordée longitudinalement sur elle-même, entre le premier rouleau d'entraînement d'axe horizontal X et un deuxième rouleau axe vertical Z monté en aval selon le sens de déplacement du tapis.

Les rampes 22 sont réparties en quatre couples 221, 222 pour redresser les formats de base 19 des quatre bandes élémentaires de pâte garnie. Les rampes d'un même couple se redressent symétriquement par rapport à un plan médian P traversant chaque bande élémentaire et sont distantes au niveau des axes verticaux d'un intervalle réglable, d'environ 1,5cm dans l'exemple de réalisation non limitatif. Un couple de rampes redresse successivement, dans le sens de défilement du tapis, les faces 3a des formats 19 en regard l'une de l'autre, après avoir été formées par pliage à l'aide du disque d'appui médian 21. Les faces 3a de chaque format sont ainsi redressées verticalement, bord à bord, pour former un produit en forme de brique plate avec la tranche principale 5 opposée au dos 2.

Les formats de base ainsi dressés verticalement, et maintenues latéralement par des flasques latéraux, d'autres rampes verticales ou, comme illustré, des taquets 22a, présentent leurs tranches principales horizontalement au poste de dépose 23 de joint alimentaire. A ce poste, un cordon de pâte alimentaire 24, à base d'amidon et/ou fécule, est déposé à travers quatre dispositifs à buse d `éjection 25 sur les tranches 5 de manière continue.

Cette pâte peut être issue d'un mélange de farine de blé et d'eau, éventuellement, avec d'autres additifs (colorants par exemple). Elle est déposée à la viscosité requise. Le cordon 24 adhère à la pâte et aux ingrédients affleurants. Afin de bien détacher le cordon sur chaque tranche, les formats sont avantageusement accélérés sur un tapis 26 muni de taquets latéraux 22a de maintien vertical des faces des formats.

Les formats de base et leurs cordons sont ensuite passés dans un four infrarouge transversal 27, pour cuire et colorer les cordons en utilisant des longueurs d'onde dédiées. De plus l'ensemble de la pâte du produit alimentaire ainsi réalisé est alors rigidifié et homogénéisé.

Sur la chaîne de l'exemple de réalisation, il est ainsi possible de sortir 3000 produits à l'heure. La longueur de la chaîne est suffisante pour permettre un refroidissement des produits et éviter de trop grands chocs thermiques lors de la phase ultérieure de congélation.

Les produits alimentaires, déposés à plat sur le tapis de convoyage, sont refroidis à -25°C dans une chambre de surgélation 28, avant de parvenir à un poste de conditionnement - stockage terminal 29 du produit. A ce poste, les produits sont encartonnés, fermés par un adhésif et stockés en chambre froide à -18°C.

Le produit obtenu est consommable à la main sans risque de fuite, après avoir été réchauffé. Grâce aux ouvertures des tranches latérales, les ingrédients et garnitures des produits alimentaires peuvent être consommés à température idéale.

L'invention n'est pas limitée aux exemples de réalisation décrits et représentés. De nombreuses variantes de réalisation sont possibles sans sortir de l'invention, concernant par exemple la forme polygonale du produit alimentaire, les différentes recettes de pâte et d'ingrédients formant une garniture salée ou sucrée, les différentes adaptations de la chaîne, par exemple la préparation en continue de la pâte dans un malaxeur ou le contrôle de l'ensemble des opérations et postes de travail par des capteurs en température, pression, degré d'humidité ou hygrométrique, reliés à une unité centrale de surveillance.

Par ailleurs, le tapis peut être formé d'un seul tenant sur toute la chaîne, ou bien formé de plusieurs secteurs juxtaposés et dédiés aux postes de travail de la chaîne. Au poste de dépose du cordon de pâte alimentaire, il est ainsi possible former un joint sur la tranche principale et sur une tranche latérale de chaque format de base en inclinant le tapis de convoyage de 45 degrés par rapport au plan horizontal de l'installation et sur une distance adaptée, ou d'incliner également de 45 degrés la buse d'éjection de produit alimentaire. De plus, la découpe longitudinale de la pâte en bandes élémentaires peut être réalisée avant la cuisson de la pâte et des ingrédients.

## Revendications

1. Procédé de fabrication d'un produit alimentaire à pâte pliée, consistant à :
- préparer une pâte crue (1), de type à pizza ou équivalent, étendue dans un format de base sensiblement rectangulaire, double de celui du produit à obtenir ;
- disposer sur cette pâte crue les divers ingrédients (7a, 7b) choisis ;
- cuire cette pâte avec ses ingrédients dans un four à sole et à voûte, au contact de la sole et à la chaleur ambiante de la voûte ;
- replier sur elle-même la pâte garnie cuite à la sortie du four à partir d'un pli médian formant un dos (2) de liaison à pâte continue de deux faces en regard sensiblement planes (3a, 3b), avec un alignement des bords (3) des faces délimitant une tranche principale (5), opposée au dos de liaison (2), et des tranches latérales (6a, 6b), dans un format correspondant à celui du produit à obtenir; et
- enduire la tranche principale (5) ainsi que, au plus, l'une des tranches latérales (6a, 6b) et les éventuels ingrédients y affleurant, d'un cordon alimentaire (4) de jonction des bords.

2. Chaîne industrielle de fabrication en continu pour la mise en oeuvre du procédé selon la revendication 1, comportant les postes opérationnels successifs suivants :
- un poste de préparation d'une pâte crue ;
- un poste d'extrusion-laminage (10) de la pâte crue préparée pour être délivrée en une bande continue (9) par une ouverture (10a) débouchant sur un tapis de convoyage (8) en mouvement, selon une largeur et un épaisseur déterminées par cette ouverture (10a) ;
- au moins un poste de garnissage (11a, 11b) de la bande de pâte (9) avec des ingrédients (12, 13) déposés sur une épaisseur calibrée par largage en pluie et/ou projection ;
- un four de cuisson (14), disposé en chevauchement sur le tapis de convoyage (8) de la pâte garnie, pour cuire la pâte en continu à une température et en un temps de passage déterminés ;
- un poste de découpe longitudinale (15) en bandes élémentaires (9a) de la bande de pâte (9) et de découpe transversale (17) pour réaliser des formats de base (19) sensiblement rectangulaires, avec séparation de ces formats ;
- un poste de pliage (20) des bandes élémentaire (9a) de pâte garnie cuite, chaude et encore souple, ce poste étant muni, pour chaque bande élémentaire de pâte (9a), d'un moyen d'appui médian (21) et de guides de redressement vertical (22), en regard l'une de l'autre, des faces (3a, 3b) formées par pliage à l'aide du moyen d'appui médian (21) ;
- un poste de dépose (23) d'un cordon de pâte alimentaire (24) sur la tranche principale (5) ainsi que, en option, sur au plus l'une des tranches latérales (6a, 6b), formée(s) entre les bords (3) sensiblement en regard des faces (3a) de chacun des formats de base replié, maintenues en position verticale à l'aide de flasques latéraux (22a) ;
- un poste de cuisson et de coloration des cordons de pâte alimentaire dans un four transversal (27) afin de cuire et colorer les cordons (24) pour obtenir une pâte formant une enveloppe homogène et rigidifiée ; et
- un poste de refroidissement (28) et de conditionnement (29) des produits alimentaires obtenus et à consommer après réchauffage.

3. Chaîne industrielle de fabrication en continu pour la mise en oeuvre du procédé selon la revendication 1, comportant les postes opérationnels successifs suivants :
- un poste de préparation d'une pâte crue ;
- un poste d'extrusion-laminage (10) de la pâte crue préparée pour être délivrée en une bande continue (9) par une ouverture (10a) débouchant sur un tapis de convoyage (8) en mouvement, selon une largeur et un épaisseur déterminées par cette ouverture (10a) ;
- au moins un poste de garnissage (11a, 11b) de la bande de pâte (9) avec des ingrédients (12, 13) déposés sur une épaisseur calibrée par largage en pluie et/ou projection ;
- un four de cuisson (14) , disposé en chevauchement sur le tapis de convoyage (8) de la pâte garnie, pour cuire la pâte en continu à une température et en un temps de passage déterminés ;
- un poste de découpe longitudinale (15) en bandes élémentaires (9a) de la bande de pâte (9) ;
- un poste de pliage (20) des bandes élémentaire (9a) de pâte garnie cuite, chaude et encore souple, ce poste étant muni, pour chaque bande élémentaire de pâte (9a), d'un moyen d'appui médian (21) et de guides de redressement vertical (22), en regard l'une de l'autre, des faces (3a, 3b) formées par pliage à l'aide du moyen d'appui médian (21) ;
- un poste de dépose (23) d'un cordon de pâte alimentaire (24) sur la tranche principale (5) ainsi que, en option, sur au plus l'une des tranches latérales (6a, 6b), formée(s) entre les bords (3) sensiblement en regard des faces (3a) de chacun des formats de base replié, maintenues en position verticale à l'aide de flasques latéraux (22a) ;
- un poste de cuisson et de coloration des cordons de pâte alimentaire dans un four transversal (27) afin de cuire et colorer les cordons (24) pour obtenir une pâte formant une enveloppe homogène et rigidifiée ;
- un poste de découpe transversale (17) pour réaliser des formations de base (19) sensiblement rectangulaires, avec séparation de ces formats et de leur cordon de pâte alimentaire (24) ; et
- un poste de refroidissement (28) et de conditionnement (29) des produits alimentaires obtenus et à consommer après réchauffage.

4. Chaîne industrielle selon la revendication 2 ou 3, dans laquelle chaque guide de redressement vertical (22) est formé d'une rampe de roulement défilant entre un axe d'entraînement horizontal (X) et un axe d'entraînement vertical (Z).

5. Chaîne industrielle selon la revendication 4, dans laquelle un couple de rampes (221, 222) est associé à chaque bande élémentaire de pâte (9a), les rampes étant symétriques par rapport au plan médian (P) présenté par la bande élémentaire de pâte.

6. Chaîne industrielle selon la revendication 2 ou 3, dans laquelle le poste de garnissage est double, dans le premier poste (11a) une couche de nappage de sauce de fond est déposée en pluie à partir d'une première trémie et, dans le deuxième poste (11b), les autres ingrédients sont déposés en pluie par entraînement à partir d'une deuxième trémie par projection à l'aide d'un tambour denté (112) en rotation.

7. Chaîne industrielle selon la revendication 2 ou 3, dans laquelle, au poste de découpes longitudinale et transversale (17), les moyens de découpe sont choisis parmi des lames tranchantes des dispositifs d'émission ultrasonique, des dispositifs de rayonnement laser et des jets d'eau à haute puissance (Y, Z) pour la découpe transversale.

8. Chaîne industrielle selon la revendication 2, dans laquelle des cordons de pâte alimentaire des formats de base (19) sont détachés sur chaque format par accélération du tapis de convoyage (26) après le poste de dépose (23) du cordon de pâte alimentaire.

9. Produit alimentaire obtenu par le procédé de fabrication selon la revendication 1 et notamment mis en oeuvre par la chaîne selon l'une quelconque des revendications 2 à 8, à format parallélépipédique fermé par un cordon de pâte alimentaire (4) sur la tranche principale (5) opposée au dos de liaison (2) et formée entre les faces principales (3a) ainsi que, sur au plus l'une des tranches latérales (6a, 6b).

## Claims

1. A method of producing a folded-dough food product, consisting in:
- preparing a raw dough (1), of the pizza type or equivalent, spread out in a substantially rectangular base format, double that of the product to be obtained;
- arranging on the raw dough the various ingredients selected (7a, 7b);
- cooking the dough with its ingredients in an oven with sole and arch, in contact with the sole and the ambient heat of the arch;
- folding the cooked garnished dough on to itself on leaving the oven, starting from a median fold forming a back part (2) for linking with continuous dough two substantially flat opposed faces (3a, 3b), with an alignment of the edges (3) of the faces defining a main cut edge (5), opposed to the linking back part (2), and lateral cut edges (6a, 6b), in a format corresponding to that of the product to be obtained; and
- coating the main cut edge (5) and also, at most, one of the lateral cut edges (6a, 6b) and any ingredients flush therewith, with an edible bead (4) for joining the edges.

2. A continuous industrial production line for the implementation of the method according to claim 1, including the following consecutive operational stations:
- a raw dough preparation station:
- an extrusion/lamination station (10) for the raw dough prepared to be delivered in a continuous band (9) through an aperture (10a) opening on to a moving conveyor belt (8), with a width and thickness determined by the aperture (10a);
at least one garnishing station (11a, 11b) for garnishing the band of dough (9) with the ingredients (12, 13) deposited in a calibrated thickness by sprinkling and/or projection;
- a cooking oven (14), arranged straddling the conveyor belt (8) for conveying the garnished dough, to cook the dough continuously at a specific temperature and for a specific dwell time;
- a station for longitudinal cutting (15) of the band of dough (9) into unitary strips (9a) and for transverse cutting (17) to produce substantially rectangular base formats (19), with separation of said formats;
- a folding station (20) for folding the unitary strips (9a) of cooked garnished dough, hot and still flexible, this station being equipped, for each unitary strip of dough (9a), with a median bearing means (21) and with guides (22) for raising vertically, opposite each other, the faces (3a, 3b) formed by folding by means of the median bearing means (21);
- a depositing station (23) for depositing a bead of edible paste (24) on the main cut edge (5) and also, optionally, on at most one of the lateral cut edges (6a, 6b), formed between the substantially opposed edges (3) of the faces (3a) of each of the folded base formats, maintained in a vertical position by means of lateral flanges (22a);
- a station for cooking and colouring the beads of edible paste in a transverse oven (27) in order to cook and colour the beads (24) to obtain a dough forming a homogeneous and rigidified envelope; and
- a station for cooling (28) and packaging (29) the food products obtained and to be consumed after reheating.

3. A continuous industrial production line for the implementation of the method according to claim 1, including the following consecutive operational stations:
- a raw dough preparation station;
- an extrusion/lamination station (10) for the raw dough prepared to be delivered in a continuous band (9) through an aperture (10a) opening on to a moving conveyor belt (8), in a width and thickness determined by said aperture (10a);
- at least one garnishing station (11a, 11b) for garnishing the band of dough (9) with ingredients (12, 13) deposited in a calibrated thickness by sprinkling and/or projection;
- a cooking oven (14), arranged straddling the conveyor belt (8) for conveying the garnished dough, for cooking the dough continuously at a specific temperature and for a specific dwell time;
- a station for longitudinal cutting (15) of the band of dough (9) into unitary strips (9a);
- a folding station (20) for folding the unitary strips (9a) of cooked garnished dough, hot and still flexible, said station being equipped, for each unitary strip of dough (9a), with a median bearing means (21) and with guides for raising vertically (22), opposite each other, the faces (3a, 3b) formed by folding by means of the median bearing means (21);
- a depositing station (23) for depositing a bead of edible paste (24) on the main cut edge (5) and also, optionally, on at most one of the lateral cut edges (6a, 6b), formed between the substantially opposed edges (3) of the faces (3a) of each of the folded base formats, maintained in a vertical position by means of lateral flanges (22a);
- a station for cooking and colouring the beads of edible paste in a transverse oven (27) in order to cook and colour the beads (24) to obtain a dough forming a homogeneous and rigidified envelope;
- a transverse cutting station (17) for producing substantially rectangular base formations (19), with separation of the formats and of their bead of edible paste (24); and
- a station for cooling (28) and packaging (29) the food products obtained and to be consumed after reheating.

4. An industrial production line according to claim 2 or 3, wherein each vertical raising guide (22) is formed by a rolling ramp passing between a horizontal drive axis (X) and a vertical drive axis (Z).

5. An industrial production line according to claim 4, wherein a pair of ramps (221, 222) is associated with each unitary strip of dough (9a), the ramps being symmetrical with respect to the median plane (P) exhibited by the unitary strip of dough.

6. An industrial production line according to claim 2 or 3, wherein the garnishing station is double, in the first station (11a) a coating layer of base sauce is sprinkled from a first hopper and, in the second station (11b), the other ingredients are sprinkled by entrainment from a second hopper by projection by means of a rotating toothed drum (112).

7. An industrial production line according to claim 2 or 3, wherein, at the station for longitudinal and transverse cutting (17), the cutting means are selected from among cutting blades of ultrasonic emission devices, laser radiation devices and high-power water jets (Y,Z) for the transverse cutting.

8. An industrial production line according to claim 2, wherein beads of edible paste of the base formats (19) are detached on each format by acceleration of the conveyor belt (26) after the depositing station (23) for depositing the bead of edible paste.

9. A food product obtained by the method of production according to claim 1 and especially implemented by the production line according to any one of claims 2 to 8, in the shape of a parallelepiped closed by a bead of edible paste (4) on the main cut edge (5) opposite the linking back part (2) and formed between the main faces (3a) and also, on at most one of the lateral cut edges (6a, 6b).

## Patentansprüche

1. Verfahren zur Herstellung eines Lebensmittelprodukts mit gefaltetem Teig, umfassend:
- Zubereiten eines pizzaartigen oder gleichwertigen Rohteiges (1), der sich in einem im Wesentlichen rechteckigen Basisformat erstreckt, das doppelt so groß wie das des zu gewinnenden Produkts ist;
- Aufbringen der verschiedenen ausgewählten Zutaten (7a, 7b) auf dem Rohteig;
- Backen dieses Teigs mit seinen Zutaten in einem Boden- und Gewölbeofen, in Kontakt mit dem Boden und in der Umgebungswärme des Gewölbes;
- Zusammenklappen des gebackenen, belegten Teigs am Ausgang des Ofens ausgehend von einer mittleren Falte, die einen Verbindungsrücken (2) aus fortlaufendem Teig aus im Wesentlichen ebenen, gegenüberliegenden Seiten (3a, 3b) bildet, wobei eine Ausrichtung der Ränder (3) der Seiten eine Hauptfläche (5), die dem Verbindungsrücken (2) gegenüberliegt, und Seitenflächen (6a, 6b) in einem Format begrenzt, das dem des zu gewinnenden Produkts entspricht; und
- Abdecken der Hauptfläche (5) sowie höchstens die eine der Seitenflächen (6a, 6b) und die dort möglicherweise hervorragenden Zutaten mit einem die Ränder verbindenden Lebensmittelband (4).

2. Endlosfertigungsfließband zur Umsetzung des Verfahrens gemäß dem Anspruch 1, das die folgenden aufeinanderfolgenden Arbeitsstellen umfasst:
- eine Stelle zur Zubereitung eines Rohteiges;
- eine Stelle (10) zum Schichtextrudieren des zubereiteten Rohteiges, so dass dieser durch eine Öffnung (10a), die sich zu einem sich bewegendes Mitnahmeband (8) öffnet, als fortlaufendes Band (9) ausgegeben wird, und zwar entsprechend der Breite und Dicke, die durch diese Öffnung (10a) bestimmt sind;
- wenigstens eine Stelle (11a, 11b) zum Belegen des Teigbandes (9) mit Zutaten (12, 13), die mit einer Dicke aufgebracht werden, die durch Herabfallenlassen und/oder Herabwerfen eingestellt wird;
- einen Backofen (14), der das Mitnahmeband (8) des belegten Teigs übergreifend angeordnet ist, um den Teig fortlaufend bei einer vorbestimmten Temperatur und mit einer vorbestimmten Durchlaufzeit zu backen;
- eine Stelle (15) zum Schneiden in Längsrichtung des Teigbandes (9) in einzelne Bänder (9a) und eine Stelle (17) zum Schneiden in Querrichtung, um im Wesentlichen rechteckige Basisformate (19) herzustellen, wobei diese Formate getrennt werden;
- eine Stelle (20) zum Falten der einzelnen Bänder (9a) aus belegtem, gebackenen, heißem und noch biegsamen Teig, wobei diese Stelle für jedes einzelne Teigband (9a) ein Mittel (21) zum mittigen Abstützen und einander gegenüberliegende Führungen (22) zum vertikalen Aufrichten der durch Falten gebildeten Seiten (3a, 3b) mit Hilfe des Mittels (21) zum mittigen Abstützen umfasst;
- eine Stelle (23) zum Anbringen eines Bandes (24) aus Lebensmittelteig auf die Hauptfläche (5) sowie gegebenenfalls auf höchstens eine der Seitenflächen (6a, 6b), die zwischen den Rändern (3), im Wesentlichen gegenüber den Seiten (3a) jedes gefalteten Basisformats gebildet ist (sind), die mit Hilfe von Seitenwänden (22a) in vertikaler Position gehalten werden;
- eine Stelle zum Backen und Einfärben der Lebensmittelteigbänder in einem Querofen (27), um die Bänder (24) zu backen und so einen Teig zu erhalten, der eine homogene und steife Hülle bildet; und
- eine Stelle zum Kühlen (28) und Verpacken (29) der gewonnenen und nach dem Aufwärmen zu konsumierenden Lebensmittelprodukte.

3. Endlosfertigungsfließband zur Umsetzung des Verfahrens gemäß dem Anspruch 1, das die folgenden aufeinanderfolgenden Arbeitsstellen umfasst:
- eine Stelle zur Zubereitung eines Rohteiges;
- eine Stelle (10) zum Schichtextrudieren des zubereiteten Rohteiges, so dass dieser durch eine Öffnung (10a), die sich zu einem sich bewegendes Mitnahmeband (8) öffnet, als fortlaufendes Band (9) ausgegeben wird, und zwar entsprechend der Breite und Dicke, die durch diese Öffnung (10a) bestimmt sind;
- wenigstens eine Stelle (11a, 11b) zum Belegen des Teigbandes (9) mit Zutaten (12, 13), die mit einer Dicke aufgebracht werden, die durch Herabfallenlassen und/oder Herabwerfen eingestellt wird;
- einen Backofen (14), der das Mitnahmeband (8) des belegten Teigs übergreifend angeordnet ist, um den Teig fortlaufend bei einer vorbestimmten Temperatur und mit einer vorbestimmten Durchlaufzeit zu backen;
- eine Stelle (15) zum Schneiden in Längsrichtung des Teigbandes (9) in einzelne Bänder (9a);
- eine Stelle (20) zum Falten der einzelnen Bänder (9a) aus belegtem, gebackenen, heißem und noch biegsamen Teig, wobei diese Stelle für jedes einzelne Teigband (9a) ein Mittel (21) zum mittigen Abstützen und einander gegenüberliegende Führungen (22) zum vertikalen Aufrichten der durch Falten gebildeten Seiten (3a, 3b) mit Hilfe des Mittels (21) zum mittigen Abstützen umfasst;
- eine Stelle zum Backen und Einfärben der Lebensmittelteigbänder in einem Querofen (27), um die Bänder (24) zu backen und so einen Teig zu erhalten, der eine homogene und steife Hülle bildet;
- eine Stelle (17) zum Schneiden in Querrichtung, um im Wesentlichen rechteckige Basisformate (19) herzustellen, wobei diese Formate und ihre Lebensmittelbänder (24) getrennt werden; und
- eine Stelle zum Kühlen (28) und Verpacken (29) der gewonnenen und nach dem Aufwärmen zu konsumierenden Lebensmittelprodukte.

4. Fließband nach Anspruch 2 oder 3, in der jede Führung (22) zum vertikalen Aufrichten aus einer Walzenrampe gebildet ist, die zwischen einer horizontalen Mitnahmeachse (X) und einer vertikalen Mitnahmeachse (Y) läuft.

5. Fließband nach Anspruch 4, in der ein Paar von Rampen (221, 222) jedem Teiglebensmittelband (9a) zugeordnet ist, wobei die Rampen symmetrisch bezüglich der mittleren Ebene (P) sind, die durch das Teiglebensmittelband dargestellt wird.

6. Fließband nach Anspruch 2 oder 3, in der die Stelle zum Belegen doppelt ist, bei der erste Stelle (11a) wird ein Saucenbelagschicht aus einem ersten Trichter von oben herab aufgebracht, und bei der zweiten Stelle (11b) werden die weiteren Zutaten durch Mitnahme von einem zweiten Trichter durch Herunterwerfen mit Hilfe einer Zahnrolle (112) aufgebracht.

7. Fließband nach Anspruch 2 oder 3, in der bei der Stelle (17) zum Schneiden in Längs- und Querrichtung die Schneidmittel aus den Schneidklingen von Ultraschallvorrichtungen, Laserstrahlvorrichtungen und Druckwasserstrahlen (Y, Z) für den Schnitt in Querrichtung ausgesucht sind.

8. Fließband nach Anspruch 2, in dem die Lebensmittelteilbänder der Basisformate (19) von jedem Format durch Beschleunigen des Mitnahmebandes (26) nach der Stelle (23) zum Anbringen des Lebensmittelbandes abgelöst werden.

9. Lebensmittelprodukt, das durch das Herstellungsverfahren nach Anspruch 1 gewonnen und insbesondere durch das Fließband nach einem der Ansprüche 1 bis 8 umgesetzt wird, mit einem quaderförmigen Format, das auf der dem Verbindungsrücken (2) gegenüber liegenden Hauptseite (5) durch ein Lebensmittelband (4) verschlossen ist, das zwischen den Hauptseiten (3a) und auf höchstens einer der Seitenflächen (6a, 6b) ausgebildet ist.
